Europäisches Patentamt

(19) European Patent Office

Office européen des brevets

(11) Numéro de publication : **0 229 741 B1**

## (12) FASCICULE DE BREVET EUROPEEN

(45) Date de publication du fascicule du brevet :
06.03.91 Bulletin 91/10

(51) Int. Cl.⁵ : **C09J 103/02**

(21) Numéro de dépôt : **87400104.3**

(22) Date de dépôt : **16.01.87**

(54) Procédé de fabrication d'adhésifs à base d'amidon pour carton ondulé.

(30) Priorité : **17.01.86 FR 8600633**

(43) Date de publication de la demande :
**22.07.87 Bulletin 87/30**

(45) Mention de la délivrance du brevet :
**06.03.91 Bulletin 91/10**

(84) Etats contractants désignés :
**BE CH DE ES FR GB IT LI NL SE**

(56) Documents cités :
**FR-A- 1 199 045
US-A- 2 999 030
CHEMICAL ABSTRACTS, vol. 97, no. 20, 15
novembre 1982, page 110, résumé no.
164888z, Columbus, Ohio, US; & JP-A-82 22
958 (YOSHINAGA HIROSHI) 15-05-1982**

(73) Titulaire : **Roquette Frères
F-62136 Lestrem (FR)**

(72) Inventeur : **Robert, Michel
74 Rue du Pont Riqueult
F-62136 Lestrem (FR)**
Inventeur : **Breuil, Dominique
19 rue de la Place
F-62136 Vieille Chapelle (FR)**

(74) Mandataire : **Koch, Gustave et al
Cabinet PLASSERAUD 84, rue d'Amsterdam
F-75009 Paris (FR)**

## Description

L'invention a pour objet un procédé de préparation d'adhésifs à base d'amidon pour carton ondulé.

On rappelle que le carton ondulé est constitué par une feuille de papier ou de carton cannelée appelée "cannelure" contre une ou contre les deux faces de laquelle est (ou sont) appliquée(s), suivant le cas, une (ou deux) feuille(s) de papier Kraft appelées "couvertures", solidarisée(s) avec la cannelure par des joints de colle au niveau de la ligne de contact de la (ou des) couvertures avec les sommets des cannelures d'une (ou des deux) face(s) de celle-ci.

Lorsque la cannelure est associée à une couverture, le carton ondulé s'appelle "simple face" et, lorsqu'il est associé à deux couvertures, il s'agit d'un carton ondulé "double face".

Pour préparer le carton ondulé, on fait passer une bande de papier, après humidification à la vapeur, entre des cylindres cannelés et chauffés. Pour l'obtention d'un carton ondulé "simple face", on applique sur un côté du papier cannelé chauffé, de l'adhésif au niveau du sommet de chaque cannelure. Immédiatement après la dépose de colle, on met, sous l'influence de la chaleur et de la pression, le papier cannelé en contact avec la bande de papier couverture pour former entre les deux couches une forte liaison d'adhérence.

Le carton ondulé dit "double face" est obtenu, en appliquant dans une nouvelle opération, de l'adhésif sur les extrémités exposées des cannelures de la simple face auxquelles on applique une seconde bande de papier de couverture que l'on colle sous l'influence de la chaleur et de la pression, en utilisant une machine à produire du carton ondulé double face.

D'autres types de carton ondulé plus rigides, pouvant servir à la fabrication d'emballages, sont obtenus par assemblage soit d'un carton "simple face" sur un carton "double face" et sont appelés "double double", soit de deux cartons "simple face" sur un carton "double face" et sont appelés "triple cannelure". Ces cartons "double-double" et "triple cannelure" sont traditionnellement fabriqués sur le poste double face des trains onduleurs.

La fabrication du carton ondulé date du début du siècle. A cette époque, les vitesses de production étaient extrêmement faibles. Les premiers adhésifs utilisés étaient à base d'amidons. Puis on a eu recours au silicate de soude. L'abandon du silicate de soude comme agent collant pour revenir à l'amidon dans les années 1960 a permis d'atteindre rapidement 100 mètres par minute puis 150 mètres et maintenant plus de 250 mètres par minute avec l'arrivée des simples faces sans peigne.

Cette augmentation des vitesses de production du carton ondulé est allée de pair avec une amélioration des systèmes de dépose de colle, permettant aujourd'hui un meilleur centrage de la colle déposée sur le sommet de la cannelure et d'adapter avec précision les quantités d'adhésifs nécessaires et suffisantes à chaque type de carton fabriqué.

Mais, en tout état de cause, ces vitesses élevées dépendent particulièrement de la qualité des agents collants employés.

Les adhésifs à base d'amidon utilisés pour la fabrication du carton ondulé sont essentiellement préparés suivant les procédés bien connus STEIN HALL (brevet US 2.051.025) et "NO CARRIER" (brevet US 3.355.307).

Le procédé STEIN-HALL conduit à la préparation d'un adhésif dit "colle de type Stein Hall" présentant deux phases essentielles ; la première phase ou "primaire" est constituée par un empois d'amidon natif ou modifié obtenu par gélatinisation en présence d'un agent alcalin accompagnée ou non d'un traitement thermique ; elle sert d'agent suspensif ou "support" à la seconde phase ou "secondaire" constituée d'une dispersion aqueuse d'amidon granulaire natif ou modifié.

Les adhésifs ainsi obtenus ont traditionnellement un extrait sec de 20% en poids.

D'une façon générale, le procédé STEIN-HALL conduit à des adhésifs ayant une texture dite "longue" caractérisée par une vitesse d'écoulement STEIN-HALL d'environ 25 à 60 secondes pour une viscosité Brookfield RVT de 150 à 350 centipoises à une température voisine de 30°C. Ce type d'adhésif, lorsqu'il est utilisé sur des machines modernes à vitesse élevée, entraîne des imperfections au niveau de la dépose de la colle sur le sommet des cannelures ; en effet, le ménisque formé par la colle à la séparation de la cannelure et du colleur s'étire, ce qui provoque des projections et/ou des bavures sur les flancs des cannelures qui interdisent au train onduleur d'atteindre ses meilleures performances.

Dans la pratique, l'homme de l'art recherche des compositions adhésives qui ont une viscosité telle qu'elles puissent circuler aisément dans les installations de dépose sans que pour autant leur texture n'entraîne les imperfections précitées ; de telles textures sont dites "courtes" ; elles sont mieux distribuées sur le sommet des cannelures sans provoquer de bavures et/ou de projections à grandes vitesses et, d'autre part, conduisent à une imprégnation moins importante des papiers cannelés et couvertures, ce qui favorise la qualité des joints de colle.

Pour obtenir, par mise en oeuvre du procédé STEIN-HALL, des colles à texture courte, il a fallu recourir à des amidons chimiquement modifiés, notamment du type de ceux ayant subi une réticulation par un composé polyfonctionnel (épichlorhydrine, oxychlorure de phosphore, trimétaphosphate de sodium, formaldéhyde et autres). De tels adhésifs du type STEIN-HALL à texture dite "courte" sont caractérisés par une vitesse d'écoulement STEIN-HALL d'environ 25 à 65 secondes mais pour une viscosité Brookfield RVT de 350 à 1500 centipoises à une température d'environ 30°C.

Il se trouve toutefois que l'utilisation de tels amidons implique une augmentation substantielle du prix de l'adhésif, ce qui est un handicap majeur.

Dans le procédé NO CARRIER, l'amidon natif ou modifié est gonflé par l'action concomitante d'un agent alcalin, dosé en excès et de la température. Ce gonflement est arrêté dès que l'adhésif a atteint une viscosité conforme aux exigences de la technique par neutralisation de l'excès de base à l'aide d'un acide ou un de ses sels et/ou par abaissement de la température. La colle dite "NO CARRIER" ainsi obtenue est à une seule phase.

Elle a une texture dite "courte" caractérisée par une vitesse d'écoulement STEIN-HALL d'environ 25 à 45 secondes pour une viscosité Brookfield RVT de 350 à 1500 centipoises à une température voisine de 40°C, mais les exigences propres à sa préparation font que le procédé NO CARRIER est d'un emploi délicat.

En effet, pour un taux d'agent alcalin et une température déterminés, ce procédé requiert l'emploi d'un amidon ayant une sensibilité essentiellement constante à l'égard des agents alcalins et/ou éventuellement à la température pour garantir une parfaite homogénéité des adhésifs ainsi produits. Ainsi, la durée réactionnelle doit être précise, sinon les grains d'amidon ou bien gonflent trop peu, auquel cas la viscosité de l'adhésif demeure faible et le collage final est retardé, ou bien gonflent trop auquel cas la viscosité de l'adhésif est trop élevée et le transfert de l'adhésif par le système de dépose devient plus difficile et le collage est irrégulier.

Or, compte tenu d'une part des variations climatiques observées lors d'un cycle végétatif et d'autre part, de la disparité des sols et de la qualité des semences, il est extrêmement difficile de garantir un approvisionnement régulier en amidons pouvant satisfaire aux exigences précitées.

Par ailleurs, les quantités de base et d'agent d'arrêt mises en oeuvre sont faibles par rapport aux quantités d'amidon et d'eau ; par conséquent, même de petites variations de leur dosage modifient les caractéristiques de l'adhésif final et nécessitent des réglages délicats de la température et de la durée réactionnelle. De plus, la façon d'ajouter la base est très importante car un mélange irrégulier de la base dans la suspension d'amidon provoque localement des excès de gonflement et de gélatinisation des grains d'amidon en produisant de petits gels d'amidon au sein de l'adhésif dont la qualité devient irrégulière.

Pour remédier aux inconvénients sus-décrits, on a proposé d'apporter différentes variantes aux procédés STEIN-HALL et NO CARRIER.

Ainsi, le brevet FR 2 306 247 décrit un procédé de préparation d'un liant renfermant un adhésif pour carton ondulé, dans lequel on utilise comme liant un amidon non gélatinisé non modifié ou non gélatinisé et modifié, obtenu en traitant à la chaleur une suspension aqueuse renfermant de 35 à 45% en poids de cet amidon à une température inférieure à la température de gélatinisation de l'amidon jusqu'à ce que la viscosité Brookfield de ladite suspension soit de 500 à 1000 centipoises ; le produit ainsi obtenu présente l'inconvénient d'être de structure amorphe.

Le brevet FR 2 386 593 décrit un adhésif de type STEIN-HALL, dans lequel la partie support est préparée en soumettant une suspension d'amidon à une cuisson effectuée à l'aide d'un cuiseur à jets de vapeur fonctionnant à une température supérieure à 100°C. Un tel traitement a pour conséquence de rompre définitivement les liaisons hydrogènes maintenant ensemble les faisceaux de molécules d'amidon. Ceci se traduit par le fait que les supports ainsi préparés présentent une viscosité inférieure à 1000 centipoises et plus particulièrement voisine de 250 centipoises. Il est donc possible de préparer de cette manière des compositions à concentration plus élevée en support, tout en conservant les caractéristiques rhéologiques inhérentes aux adhésifs de type STEIN-HALL, ce qui permet d'améliorer la performance des machines à produire du carton ondulé sans toutefois annuler pour autant les inconvénients liés aux textures longues.

Par conséquent, aucun des procédés existants ne conduit, avec un prix de revient acceptable, à des adhésifs pour carton ondulé ayant d'une part une bonne stabilité et d'autre part une texture dite "courte" adaptée aux nouvelles exigences liées aux cadences élevées des machines à produire du carton ondulé.

L'invention a donc pour but, surtout, de remédier à ces inconvénients et de fournir un procédé permettant de préparer sans mise en oeuvre d'agents chimiques à caractère alcalin au cours de la phase de gonflement de l'amidon, des adhésifs pour carton ondulé pouvant être mis en oeuvre selon l'un des systèmes conventionnels sus-décrits utilisés pour la fabrication de ce dernier.

Or, la Société Demanderesse a eu le mérite de trouver qu'il était possible de répondre à toutes les exigences de la pratique en ayant recours pour la préparation de la phase support ou de la totalité d'un adhésif pour carton ondulé, à un procédé consistant à traiter un lait d'amidon par la chaleur, en l'absence de quantités significatives d'agent alcalin, à une température supérieure à la température de gélatinisation $T_G$ de l'amidon et inférieure à la température à laquelle les liaisons hydrogène maintenant les faisceaux des molécules d'amidon seraient définitivement rompues.

On entend, dans ce qui précède,

– par l'expression "quantité significative", une quantité dont la présence aurait pour conséquence de faire apparaître les inconvénients de l'art antérieur,

– par "température de gélatinisation" (déterminée sur une suspension d'amidon à l'aide d'un viscosigraphe BRABENDER réglé en montée régulée, la température montant de 1,5°C par minute), la température atteinte lorsque l'index du viscosigraphe mesure une différence de 20 unités BRABENDER par rapport à la ligne de base.

Dans la pratique, la quantité d'agent alcalin, exprimée en poids par rapport au poids d'amidon soumis au traitement thermique conforme à l'invention, est inférieure à 1%, de préférence inférieure à 0,75% et plus préférentiellement encore inférieure à 0,5%, étant rappelé par ailleurs que la quantité d'agent alcalin communément utilisée dans le procédé STEIN-HALL est de 18% par rapport à l'amidon constitutif du support (voir tableau 1) et d'environ 3,5% dans le procédé dit "NO CARRIER", par rapport, dans ce cas, à la quantité totale d'amidon.

L'adhésif pour carton ondulé obtenu par mise en oeuvre du procédé conforme à l'invention, présente, à 40°C, une vitesse d'écoulement du type STEIN-HALL supérieure à 20 secondes et une viscosité Brookfield supérieure à huit fois la susdite vitesse d'écoulement.

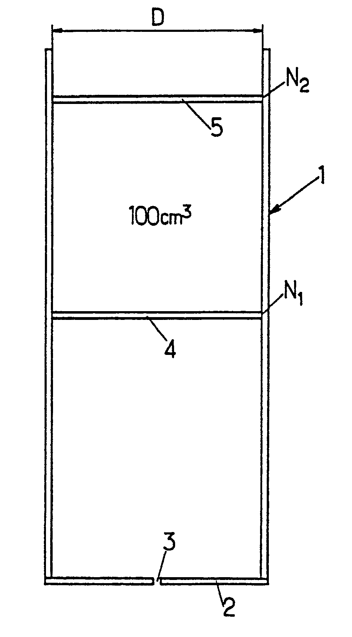

La viscosité de type STEIN-HALL dont il est question ci-dessus est déterminée à l'aide du viscosimètre d'écoulement montré figure unique. Ce viscosimètre comprend un récipient cylindrique 1 dont le fond 2 est percé en son centre d'un trou calibré 3 ; la hauteur du viscosimètre est de 127 mm, son diamètre D de 50 mm et le diamètre du trou calibré de 2,75 mm. Les deux fils métalliques, respectivement 4 et 5, servant de repères sont disposés à l'intérieur du réceptacle à deux niveaux $N_1$ et $N_2$ à une distance l'un de l'autre telle que la partie du réceptacle cylindrique comprise entre les deux fils présente une capacité de 100 cm³. Dans le cas présent, les deux fils 4 et 5 sont disposés respectivement à 65 mm et à 116 mm du fond 2.

La viscosité est mesurée par le nombre de secondes nécessaires à l'écoulement de 100 cm³ de colle à travers cet orifice.

Dans un mode de réalisation avantageux du procédé conforme à l'invention, le lait d'amidon présente une teneur en matières sèches de 0,5 à 60%, de préférence de 5 à 45% en poids ; il est soumis à un traitement par la chaleur à une température comprise entre la susdite température $T_G$ et une limite supérieure TG + x qui est différente suivant que l'amidon traité est un amidon à haute teneur en amylose ou non, ladite limite supérieure étant comprise entre $T_G$ et $T_G$ + 45°C, de préférence entre $T_G$ et $T_G$ + 30°C quand il s'agit d'un amidon à haute teneur en amylose et entre $T_G$ et $T_G$ + 35°C, de préférence entre $T_G$ et $T_G$ + 20°C et, plus préférentiellement encore, entre $T_G$ et $T_G$ + 15°C quand il s'agit d'un autre type d'amidon ; la durée du traitement thermique est de 1 seconde à 2 heures, de préférence de 1 minute à 1 heure et, plus préférentiellement encore, de 5 minutes à 30 minutes.

Ce traitement thermique est effectué en l'absence de quantités d'agent alcalin supérieures à 1%, de préférence à 0,75% et plus préférentiellement encore de 0,5% par rapport au poids d'amidon mis en oeuvre dans le traitement thermique.

Le procédé conforme à l'invention est remarquablement simple ; en effet, en choisissant judicieusement la température de cuisson de l'amidon à l'intérieur de la gamme revendiquée, on peut obtenir des colles à texture très courte si cette température est proche de TG et des colles à texture moins courte si l'on se rapproche de TG + x ; on peut ainsi adapter la qualité de cette texture courte aux conditions industrielles rencontrées.

On note par ailleurs que les variations de la durée du traitement ont une influence moindre que celles de la température mais qu'elles ajoutent aussi à la souplesse du procédé.

Toujours dans un mode de réalisation avantageux du susdit procédé conforme à l'invention, la totalité de l'amidon nécessaire à la préparation de l'adhésif est soumise sous forme de lait d'amidon au susdit traitement thermique et l'adhésif se présente avec une seule phase liquide.

Toujours dans un mode de réalisation avantageux du procédé conforme à l'invention, seule une fraction de l'amidon entrant dans la constitution de l'adhésif final est soumise au traitement thermique sous la forme d'un lait d'amidon, cette partie jouant alors, à l'égard de la fraction non traitée, le rôle du "support" des colles du type STEIN-HALL.

Dans les deux cas, on obtient des adhésifs de texture courte et de bonne stabilité.

Dans le cadre de ce dernier mode de réalisation, le procédé de préparation conforme à l'invention est caractérisé par le fait que successivement :

– on prépare un lait d'amidon d'une teneur en matières sèches de 0,5 à 60%, de préférence de 5 à 45% et, plus préférentiellement, de 10 à 40% en poids,
– on soumet ce lait d'amidon à une température supérieure à la température de gélatinisation $T_G$ et inférieure à celle à laquelle se produit la rupture définitive des liaisons hydrogène maintenant les faisceaux de molécules d'amidon,
– on mélange le lait d'amidon ainsi traité avec une fraction d'amidon non traitée et
– on ajoute les constituants habituels des adhésifs pour carton ondulé.

Pour la préparation de l'adhésif, on a recours à de l'amidon proprement dit, ses dérivés et/ou leurs mélanges,
– l'expression "amidon proprement dit" englobant les produits choisis dans le groupe comprenant les amidons natifs de toute provenance, naturels ou hybrides, provenant par exemple de la pomme de terre, de manioc, du maïs, du maïs cireux, du maïs à haute teneur en amylose, du blé ou des coupes qui peuvent en être faites, du riz, du sorgho,
– l'expression "dérivés de l'amidon" désignant tous les amidons modifiés par voie chimique, c'est-à-dire notamment par oxydation, hydrolyse (acide ou enzymatique), estérification, éthérification et autres.

La température de traitement à la chaleur, dans des conditions ménagées, conforme au procédé selon l'invention en l'absence de quantités significatives d'agent alcalin, est supérieure à la température de gélatinisation $T_G$ et, en accord avec le chapitre 9, pages 252-253 de l'ouvrage intitulé "Chemistry and Industry of Starch" édité en 1950 par Ralph W. KERR, située dans une plage de températures telle que le phénomène de gonflement de l'amidon corresponde à la rupture progressive des liaisons hydrogène intermoléculaires amidon-amidon et à la formation de nouvelles liaisons amidon-eau-amidon compensant les destructions précédentes, cette température ne devant pas dépasser la valeur à laquelle on observe une rupture définitive des liaisons eau-amidon sus-décrites.

A titre d'exemple non limitatif de traitements thermiques du lait d'amidon convenant dans le cadre de l'invention, on peut citer ceux à la vapeur, au bain-marie et aux ondes.

Il a été constaté que, de façon surprenante, les adhésifs obtenus par mise en oeuvre du procédé conforme à l'invention et notamment les laits d'amidon soumis au traitement thermique selon l'invention présentent une parfaite stabilité dans le temps, sans pour autant perdre de leurs caractéristiques, sous réserve que la température à laquelle ils sont maintenus par la suite, reste en conformité avec les plages définies plus haut.

A titre d'exemple, la Société Demanderesse a mesuré les viscosités, sur viscosigraphe BRABENDER, de suspensions à 10% de matière solide d'amidon de maïs granulaire commercialisé par la Société Demanderesse, traitées, à différentes températures, selon le procédé conforme à l'invention ou, à titre comparatif, en présence de quantités significatives d'hydroxyde de sodium conformément à l'art antérieur.

La température de gélatinisation $T_G$ des suspensions d'amidon de maïs est mesurée de la manière indiquée plus haut sur un viscographe BRABENDER.

## TABLEAU 1

| TEMPS (minutes) | Viscosité BRABENDER (UB) aux températures constantes | | | |
|---|---|---|---|---|
| | 45°C * 18% NaOH p.r. amidon | $T_G$ ** +8°C | $T_G$ +13°C | $T_G$ +18°C |
| 0 | 2 300 | 1 700 | 2 300 | 2 100 |
| 5 | 2 000 | 2 200 | 2 100 | 2 000 |
| 10 | 1 600 | 2 150 | 2 050 | 1 850 |
| 15 | 1 500 | 2 100 | 2 000 | 1 800 |
| 20 | 1 450 | 2 100 | 1 950 | 1 740 |
| 25 | 1 400 | 2 100 | 1 850 | 1 700 |
| 30 | 1 360 | 2 100 | 1 800 | 1 690 |
| 40 | 1 300 | 2 100 | 1 780 | 1 650 |
| 50 | 1 270 | 2 100 | 1 750 | 1 600 |

* Conditions que l'on trouve habituellement pour la préparation d'un support de type STEIN-HALL

** $T_G$ = 72°C.

Ces chiffres montrent clairement que la présence de quantités significatives d'hydroxyde de sodium ou d'une température de traitement trop élevée favorisent l'apparition de l'état colloïdal de ces suspensions caractérisé par une diminution importante des viscosités BRABENDER.

Lorsque seule une fraction de l'amidon est soumise au traitement thermique, elle est présente en une proportion, par rapport à la fraction non traitée ou secondaire, qui est de 119/1 à 1/119, préférentiellement de 60/1 à 1/60 et, plus préférentiellement encore, de 5/1 à 1/15.

La teneur en matières sèches totales de l'adhésif est comprise entre 5 et 60% en poids, préférentiellement entre 8 et 50% et, plus préférentiellement encore, entre 10 et 40% en poids.

Outre leur grande stabilité dont il a été question ci-dessus, les adhésifs obtenus par le procédé conforme à l'invention sont de texture "courte", ce qui les rend parfaitement adaptées aux exigences des nouvelles machines à produire le carton ondulé. Leur viscosité STEIN-HALL à 40°C est comprise environ entre 20 et 80 secondes et leur viscosité Brookfield RVT à 40°C est comprise entre 160 et 2500 centipoises; plus préférentiellement, ces viscosités sont respectivement comprises entre 25 et 65 secondes et entre 400 et 2000 centipoises.

Un avantage particulier du procédé conforme à l'invention réside dans le fait qu'il peut être mis en oeuvre, notamment en ce qui concerne la partie "support", sur des amidons natifs n'ayant fait l'objet d'aucune sélection particulière, notamment du point de vue de leur température de gélatinisation.

Grâce à l'ensemble d'avantages indiqués pour les adhésifs obtenus selon le procédé conforme à l'invention, ceux-ci sont de mise en oeuvre aisée et particulièrement bien adaptés à l'industrie du carton ondulé.

Les adhésifs obtenus selon le procédé conforme à l'invention une fois prêts à l'emploi sont généralement additionnés d'une quantité d'agent alcalin, notamment de NaOH, inférieure à 5%, de préférence inférieure à 4% et, plus préférentiellement encore, comprise entre 0,5 et 3% en poids.

Ces pourcentages d'hydroxyde de sodium sont inférieurs à ceux habituellement utilisés dans un procédé STEIN-HALL classique. En effet, dans le procédé STEIN-HALL, ces pourcentages doivent être plus élevés puisqu'une partie de l'hydroxyde de sodium participe à la gélatinisation du support et, par conséquent, à la destruction des liaisons hydrogène maintenant les faisceaux de molécule d'amidon. Les adhésifs ainsi obtenus en présence de quantités significatives d'alcali présentent bien évidemment une texture longue non satisfaisante aux exigences des nouvelles techniques de production de carton ondulé.

L'agent alcalin ajouté aux adhésifs obtenus conformément à l'invention et prêts à l'emploi favorise la gélatinisation de la fraction non soumise au traitement thermique et qui est granulaire au moment de l'emploi (température de gélatinisation amenée à une valeur comprise entre 45 et 65°C) ; l'agent alcalin est ajouté dans la fraction n'ayant pas subi le traitement thermique et/ou dans le mélange de cette fraction avec celle ayant subi ledit traitement.

D'autres additifs peuvent encore être incorporés aux adhésifs obtenus conformément à l'invention. Selon une pratique classique, il peut notamment être fait appel à des dérivés du bore pour augmenter très fortement la viscosité, lors de la gélatinisation des amidons granulaires sur machine. Ces dérivés du bore et notamment le borax décahydrate doivent être préférentiellement introduits dans la fraction de lait d'amidon n'ayant pas subi le traitement thermique et/ou dans son mélange avec la fraction traitée. Leur introduction dans la fraction traitée thermiquement conduit à l'obtention d'adhésifs classiques à deux composants de type STEIN-HALL, c'est-à-dire à des adhésifs ayant des caractéristiques rhéologiques identiques à celles des adhésifs selon l'art antérieur, donc non satisfaisants.

Il peut aussi être fait appel de manière avantageuse pour la préparation d'adhésifs conformes à l'invention, notamment à base d'amidons de tubercules, à des agents chimiques du type modificateurs de texture, agents tensio-actifs, surfactants, ces ayants ayant pour rôle de favoriser et/ou de maintenir les grains d'amidon dans l'état de gonflement visé par la présente invention.

De plus, on peut avoir recours à des agents de réticulation ou à des résines préformées dès lors que les contraintes industrielles nécessiteront que les adhésifs obtenus selon le procédé conforme à l'invention soient résistants à l'humidité.

L'invention pourra être mieux comprise à l'aide des exemples indiqués ci-après et qui sont soit comparatifs, soit relatifs à des modes de réalisation avantageux.

## EXEMPLE 1

Cet exemple concerne un adhésif de type STEIN-HALL tel que classiquement rencontré dans l'industrie du carton ondulé. Dans une cuve de 150 litres en acier munie d'un agitateur puissant, on introduit 28 kg d'eau On ajoute sous agitation 3,3 kg d'amidon de maïs non gélatinisé jusqu'à l'obtention d'une suspension homogène puis on commence à chauffer cette suspension en injectant de la vapeur vive par le fond de la cuve pour atteindre une température de 45°C. On ajoute alors 0,5 kg d'hydroxyde de sodium. On maintient l'amidon ainsi gélatinisé sous agitation pendant 10 minutes. On ajoute ensuite la quantité d'eau nécessaire pour obtenir une concentration en matière solide de ce support de 10% et on mesure les viscosités STEIN-HALL et Brookfield RVT qui sont respectivement de 154 secondes et 1100 centipoises à 45°C.

On ajoute alors au support ainsi constitué la quantité d'eau nécessaire pour obtenir un poids total de 80 kg tout en continuant d'agiter. On incorpore ensuite 16,7 kg d'amidon de maïs granulaire. L'introduction étant terminée, on additionne à l'adhésif 400 grammes de borax décahydrate, soit 2% en poids par rapport à l'amidon total de l'adhésif terminé.

On obtient un adhésif ayant une température de 28°C, une viscosité STEIN-HALL de 55 secondes et une viscosité Brookfield RVT de 280 centipoises avec une température de gélatinisation de l'amidon granulaire de 52°C.

Cet adhésif présente une texture dite longue.

La teneur en matière sèche de l'adhésif est de 20%.

Après une heure, la viscosité STEIN-HALL est de 120 secondes à 27°C.

On conserve l'adhésif pendant 48 heures, on l'agite pendant 3 minutes. Sa viscosité STEIN-HALL est alors de 120 secondes à 20°C et de 90 secondes à 28°C.

## EXEMPLE 2

Cet exemple concerne un adhésif obtenu selon le procédé conforme à l'invention dont une fraction du lait d'amidon de maïs de base est soumise au traitement thermique. Pour ce faire, on introduit dans la cuve de l'exemple 1, 28 kg d'eau à 15°C. On ajoute ensuite 3,3 kg d'amidon granulaire de maïs sous agitation afin d'obtenir une suspension homogêne. On commence alors à chauffer cette suspension en injectant de la vapeur vive par le fond de la cuve tout en continuant d'agiter. On porte ainsi la température à 75°C et on l'y maintient pendant 20 minutes sous agitation énergique. La cuisson une fois terminée, on ajoute la quantité d'eau nécessaire pour obtenir une concentration en matière solide de 10% ; on mesure les viscosités STEIN-HALL et Brookfield RVT qui sont respectivement de 112 secondes et 2700 centipoises.

On ajoute alors au "support" ainsi constitué la quantité d'eau à 15°C nécessaire pour obtenir un poids total de 80 kg tout en continuant d'agiter. On ajoute à ce mélange 400 grammes de borax décahydrate, soit 2% en poids par rapport à l'amidon total de l'adhésif terminé. On y incorpore ensuite 16,7 kg d'amidon de maïs granulaire. L'introduction étant terminée, on additionne à la préparation 400 grammes d'hydroxyde de sodium dilué dans 2 litres d'eau, soit 2% en poids par rapport au poids total de l'amidon. On obtient un adhésif ayant une température de 38°C, une viscosité STEIN-HALL de 45 secondes et une viscosité Brookfield RVT de 1100 centipoises avec une température de gélatinisation de l'amidon granulaire de 52°C possédant une texture dite "courte".

Après une heure, la viscosité STEIN-HALL est de 60 secondes à 35°C. On conserve l'adhésif pendant 24 heures, on l'agite pendant 3 minutes et on mesure la viscosité STEIN-HALL qui est de 90 secondes à 20°C.

Ces résultats illustrent la grande stabilité des adhésifs conformes à l'invention par rapport à celle des adhésifs obtenus selon l'art antérieur.

## EXEMPLE 3

Cet exemple concerne un adhésif obtenu conformément au procédé selon l'invention à deux composants à base d'amidon de blé. Dans la même cuve que celle de l'exemple 1, on introduit 28 kg d'eau à 15°C. On ajoute ensuite 3,7 kg d'amidon de blé granulaire sous agitation afin d'obtenir une suspension homogène. On chauffe cette suspension en injectant de la vapeur vive par le fond de la cuve tout en continuant d'agiter. On porte ainsi la température à 85°C et on l'y maintient pendant 20 minutes sous agitation. La cuisson une fois terminée, on ajoute la quantité d'eau nécessaire pour obtenir une concentration en matière solide de ce support à 11% et on mesure la viscosité Brookfield qui est de 2350 centipoises.

On ajoute à ce mélange 200 grammes de borax décahydrate, soit 1% en poids par rapport à l'amidon total de l'adhésif terminé. On ajoute alors au "support" ainsi constitué la quantité d'eau nécessaire pour obtenir un poids total de 80 kg tout en continuant d'agiter. On y incorpore ensuite 16,3 kg d'amidon de blé granulaire L'introduction étant terminée, on additionne à la préparation 200 grammes d'hydroxyde de sodium dilué dans un litre d'eau, soit 1% en poids par rapport au poids total de l'amidon.

On obtient un adhésif ayant une température de 41°C, une viscosité STEIN-HALL de 45 secondes, une viscosité Brookfield de 700 centipoises et une température de gélatinisation de l'amidon granulaire de 54°C;

il possède une texture dite "courte".

Après deux heures, la viscosité STEIN-HALL est de 75 secondes à 30°C.

On conserve l'adhésif pendant 48 heures, on remonte sa température à 37°C. On l'agite pendant 3 minutes et on mesure ses viscosités STEIN-HALL et Brookfield RVT qui sont respectivement de 58 secondes et 800 centipoises. Ces chiffres illustrent la grande stabilité des adhésifs obtenus conformément à l'invention.

## EXEMPLE 4

Cet exemple concerne un adhésif obtenu conformément à l'invention à deux composants à base d'amidon de maïs et de fécule de pomme de terre.

Dans la même cuve que celle utilisée par les exemples précédents, on introduit 28 kg d'eau à 15°C. On ajoute ensuite 3 kg d'amidon granulaire afin de former une suspension homogène. On chauffe cette suspension en injectant de la vapeur vive par le fond de la cuve tout en continuant d'agiter. On porte ainsi la température à 80°C et on l'y maintient pendant 15 minutes sous agitation. La cuisson terminée, on obtient un support ayant une viscosité STEIN-HALL de 62 secondes et une viscosité Brookfield de 1200 centipoises. On ajoute à ce support la quantité d'eau à 15°C nécessaire pour obtenir un poids total de 80 kg puis au mélange ainsi obtenu 300 grammes de borax décahydrate, soit 1,5% par rapport à l'amidon total. On incorpore ensuite 17 kg de fécule de pomme de terre granulaire. L'incorporation étant terminée, on additionne à la préparation 200 grammes d'hydroxyde de sodium dilué dans un litre d'eau, soit 1% en poids par rapport au poids total de l'amidon.

On obtient un adhésif ayant une température de 39°C, une viscosité STEIN-HALL de 37 secondes, une viscosité Brookfield de 700 centipoises et une température de gélatinisation de l'amidon granulaire de 50°C; cet adhésif présente donc une texture dite "courte". On conserve cet adhésif pendant deux heures au repos et on mesure sa viscosité STEIN-HALL qui est de 59 secondes à 32°C.

Après 48 heures au repos, on remonte sa température à 37°C et on mesure ses viscosités STEIN-HALL et Brookfield qui sont respectivement de 37 secondes et 580 centipoises.

## EXEMPLE 5

Cet exemple concerne un adhésif obtenu conformément au procédé selon l'invention à deux composants. Le lait soumis au traitement thermique est à base d'amidon de maïs granulaire modifié par hydrolyse acide.

Pour ce faire, on introduit dans la cuve de l'exemple 1, 28 kg d'eau à 15°C. On y ajoute ensuite 5 kg d'amidon de maïs granulaire hydrolysé, commercialisé par la Société Demanderesse sous la marque COLLYS 030, en agitant afin d'obtenir une suspension en injectant de la vapeur vive par le fond de la cuve tout en continuant d'agiter. On porte ainsi la température à 83°C et on maintient celle-ci pendant 20 minutes sous agitation. Lorsque la cuisson est terminée, on ajoute la quantité nécessaire d'eau pour obtenir une concentration en matière solide de 13%, on mesure les viscosités STEIN-HALL et Brookfield RVT, les valeurs trouvées étant respectivement de 155 secondes et 1600 centipoises.

On ajoute alors au support ainsi constitué la quantité d'eau à 15°C nécessaire pour obtenir un poids total de 80 kg tout en continuant d'agiter. On ajoute à ce mélange 400 grammes de borax décahydrate, soit 2% en poids par rapport à l'amidon total de l'adhésif terminé. On y incorpore ensuite 15 kg d'amidon de maïs granulaire L'introduction étant terminée, on additionne à la préparation 400 grammes d'hydroxyde de sodium dilué dans 2 litres d'eau, soit 2% en poids par rapport au poids total de l'amidon. On obtient un adhésif possédant une texture dite "courte" d'une température de 38°C, d'une viscosité STEIN-HALL de 49 secondes et d'une viscosité Brookfield RVT de 1100 centipoises, la température de gélatinisation de l'amidon granulaire étant de 55°C.

Il résulte de cet exemple qu'il est possible d'obtenir des adhésifs conformes à l'invention avec des amidons modifiés par voie chimique.

## EXEMPLE 6

Cet exemple concerne un adhésif obtenu conformément au procédé selon l'invention à deux composants. Le lait soumis au traitement thermique est à base d'amidon de maïs riche en amylose.

Pour ce faire, dans une autre cuve identique à celle de l'exemple 1, on introduit 67 kg d'eau à une température de 15°C. On ajoute ensuite 8 kg d'amidon de maïs riche en amylose sous agitation, afin d'obtenir une suspension homogène. Cette suspension est ensuite chauffée sous une pression supérieure à la pression atmosphérique dans un cuiseur à jets de vapeur, les conditions étant les suivantes :

```
pression manométrique de la vapeur d'eau          3 bars
température de cuisson                             115°C
contre pression manométrique                      1,8 bars
débit                                             90 l/h.
```

On récupère ensuite la partie soumise au traitement thermique dans la cuve de l'exemple 1. On mesure la viscosité Brookfield RVT, la valeur trouvée étant de 400 centipoises à 80°C.

On ajoute ensuite au support ainsi constitué 50 litres d'eau à 15°C sous agitation. On incorpore à ce mélange 25 kg d'amidon de maïs granulaire. L'introduction étant terminée, on additionne à la préparation 600 grammes de borax décahydrate, soit 2,3% en poids par rapport au poids total de l'amidon. On ajoute à ce mélange 750 g d'hydroxyde de sodium dilués dans 5 litres d'eau, soit 2,9% en poids par rapport au poids total de l'amidon.

On obtient un adhésif d'une température de 41°C, d'une viscosité STEIN-HALL de 26 secondes, d'une viscosité Brookfield RVT de 360 centipoises, et d'une température de gélatinisation de l'amidon granulaire de 54°C ; il possède une texture dite "courte".

## Revendications

1. Procédé de fabrication d'adhésifs à base d'amidon pour carton ondulé, caractérisé par le fait que, pour la préparation de la phase support ou de la totalité de l'adhésif, on traite un lait d'amidon par la chaleur, en l'absence de quantités significatives d'agent alcalin, à une température supérieure à la température de gélatinisation $T_G$ de l'amidon et inférieure à la température à laquelle les liaisons hydrogène maintenant les faisceaux des molécules d'amidon seraient définitivement rompues.

2. Procédé selon la revendication 1, caractérisé par le fait qu'un lait d'amidon présentant une teneur en matières sèches de 0,5 à 60%, de préférence de 5 à 45% en poids, est soumis à un traitement par la chaleur à une température comprise entre $T_G$ et $T_G + 45$°C, de préférence entre $T_G$ et $T_G + 30$°C quand il s'agit d'un amidon à haute teneur en amylose et entre $T_G$ et $T_G + 35$°C, de préférence entre $T_G$ et $T_G + 20$°C et, plus préférentiellement encore, entre $T_G$ et $T_G + 15$°C quand il s'agit d'un autre type d'amidon, la durée du traitement thermique étant de 1 seconde à 2 heures, de préférence de 1 minute à 1 heure et, plus préférentiellement encore, de 5 minutes à 30 minutes, ce traitement étant effectué en l'absence de quantités d'agent alcalin supérieures à 1%, de préférence à 0,75% et plus préférentiellement encore à 0,5% par rapport au poids d'amidon soumis au traitement thermique.

3. Procédé selon l'une des revendications 1 et 2, caractérisé par le fait que la totalité de l'amidon nécessaire à la préparation de l'adhésif est soumise sous forme de lait d'amidon au traitement thermique, l'adhésif se présentant avec une seule phase liquide.

4. Procédé selon l'une des revendications 1 et 2, caractérisé par le fait que seule une fraction de l'amidon entrant dans la constitution de l'adhésif final est soumise au traitement thermique sous la forme d'un lait d'amidon, cette partie jouant alors, à l'égard de la fraction non traitée, le rôle du "support".

5. Procédé selon la revendication 4, caractérisé par le fait que successivement :
– on prépare un lait d'amidon d'une teneur en matières sèches de 0,5 à 60%, de préférence de 5 à 45% et, plus préférentiellement, de 10 à 40% en poids,
– on soumet ce lait d'amidon à une température supérieure à la température de gélatinisation $T_G$ et inférieure à celle à laquelle se produit la rupture définitive des liaisons hydrogène maintenant les faisceaux de molécules d'amidon,
– on mélange le lait d'amidon ainsi traité avec une fraction d'amidon non traitée et
– on ajoute les constituants habituels des adhésifs pour carton ondulé.

6. Procédé selon l'une des revendications 1 à 5, caractérisé par le fait que, pour la préparation de l'adhésif, on a recours à :
– des amidons natifs de toute provenance, naturels ou hybrides, provenant par exemple de la pomme de terre, de manioc, du maïs, du maïs cireux, du maïs à haute teneur en amylose, du blé ou des coupes qui peuvent en être faites, du riz, du sorgho,
– ainsi qu'à des amidons modifiés par voie chimique, notamment par oxydation, hydrolyse (acide ou enzymatique), estérification, éthérification et autres et/ou leurs mélanges.

7. Procédé selon l'une des revendications 1 à 6, caractérisé par le fait que le traitement thermique du lait d'amidon est un traitement à la vapeur, au bain-marie ou aux ondes.

8. Procédé selon la revendication 4, caractérisé par le fait que la fraction d'amidon soumise au traitement thermique sous la forme d'un lait est présente dans l'adhésif final en une proportion, par rapport à la fraction non traitée ou secondaire, de 119/1 à 1/119, préférentiellement de 60/1 à 1/60 et, plus préférentiellement encore, de 5/1 à 1/15.

9. Procédé selon l'une des revendications 1 à 7, caractérisé par le fait qu'à l'adhésif prêt à l'emploi on ajoute une quantité d'agent alcalin, notamment de NaOH, inférieure à 5%, de préférence inférieure à 4% et, plus préférentiellement encore, comprise entre 0,5 et 3% en poids.

10. Procédé selon l'une des revendications 1 à 9, caractérisé par le fait qu'en choisissant, pour la température du traitement de l'amidon par la chaleur une valeur proche de TG, on obtient une colle à texture très courte et qu'en choisissant, pour cette températures une valeur proche de TG + x, on obtient une colle à texture moins courte.

## Claims

1. Process for producing starch-based adhesives for corrugated cardboard, characterised in that, for preparing the carrier phase or all of the adhesive, a starch milk is heat treated in the absence of significant quantities of alkaline agent at a temperature higher than the gelatinisation temperature $T_G$ of the starch and lower than the temperature at which the hydrogen bonds holding the clusters of starch molecules will be definitively broken.

2. Process according to claim 1, characterised in that a starch milk having a dry materials content of 0.5 to 60%, preferably 5 to 45%, by weight, is heat treated at a temperature between $T_G$ and $T_G$ + 45°C, preferably between $T_G$ and $T_G$ + 30°C, in the case of a starch having a high amylose content and between $T_G$ and $T_G$ + 35°G, preferably between $T_G$ and $T_G$ + 20°C, and even more preferably between $T_G$ and $T_G$ + 15°C, in the case of a different type of starch, the duration of thermal treatment being from 1 second to 2 hours, preferably from 1 minute to 1 hour, and even more preferably from 5 minutes to 30 minutes, this treatment being carried out in the absence of quantities of alkaline agent greater than 1%, preferably greater than 0.75%, and even more preferably greater than 0.5%, relative to the weight of starch subjected to the thermal treatment.

3. Process according to one of claims 1 and 2, characterised in that all the starch required for preparing the adhesive is subjected, in the form of starch milk, to the thermal treatment, the adhesive having only one liquid phase.

4. Process according to one of claims 1 and 2, characterised in that only a fraction of the starch entering the constitution of the final adhesive is subjected to the thermal treatment in the form of a starch milk, this portion therefore acting as the "carrier" with respect to the untreated fraction.

5. Process according to claim 4, characterised in that, successively :
   – a starch milk having a dry materials content of 0.5 to 60%, preferably 5 to 45%, and more preferably 10 to 40%, by weight, is prepared,
   – this starch milk is subjected to a temperature higher than that of the gelatinisation temperature $T_G$ and lower than that at which the hydrogen bonds holding the clusters of starch molecules are definitively broken,
   – the starch milk treated in this way is mixed with an untreated fraction of starch and
   – the normal constituents of adhesives for corrugated cardboard are added.

6. Process according to one of claims 1 to 5, characterised in that, for preparing the adhesive, there are used :
   – natural or hybrid native starches of any origin originating, for example, from potatoes, manioc, maize, waxlike maize, maize having a high amylose content, wheat or cuts which may be made from it, rice, sorghum,
   – as well as starches modified by chemical methods, in particular by oxidation, hydrolysis (acidic or enzymatic), esterification, etherification and others and/or mixtures thereof.

7. Process according to one of claims 1 to 6, characterised in that the thermal treatment of the starch milk is a steam, water bath or wave treatment.

8. Process according to claim 4, characterised in that the fraction of starch subjected to the thermal treatment in the form of a milk is present in the final adhesive in a proportion, relative to the untreated or secondary fraction, of 119/1 to 1/119, preferably 60/1 to 1/60, and even more preferably 5/1 to 1/15.

9. Process according to one of claims 1 to 7, characterised in that a quantity of alkaline agent, in particular NaOH, of less than 5%, preferably less than 4%, and even more preferably between 0.5 and 3%, by weight, is added to the adhesive which is ready for use.

10. Process according to one of claims 1 to 9, characterised in that a glue having a very short texture is obtained by selecting a value close to TG for the heat treatment temperature of the starch and a glue having a less short texture is obtained by selecting a value close to TG + x for this temperature.

## Ansprüche

1. Verfahren zur Herstellung von Klebstoffen auf Stärkebasis für Wellpappe, dadurch gekennzeichnet, daß man zur Herstellung der Trägerphase oder des ganzen Klebstoffs eine Stärkemilch in Abwesenheit wesentlicher Mengen eines alkalischen Mittels bei einer Temperatur oberhalb der Gelatinisierungstemperatur $T_G$ der Stärke und unterhalb der Temperatur, bei der die Wasserstoffbindungen, die die Stärkemolekül-Fasern aufrechterhalten, endgültig zerstört werden, mit Wärme behandelt.

2. Verfahren gemäß Anspruch 1, dadurch gekennzeichnet, daß eine Stärkemilch mit einem Trockensubstanzgehalt von 0,5 bis 60, vorzugsweise 5 bis 45 Gew.-%, einer Behandlung durch Wärme bei einer Temperatur zwischen $T_G$ und $T_G$ + 45°C, vorzugsweise zwischen $T_G$ und $T_G$ + 30°C, wenn es sich um eine Stärke mit einem hohen Amylosegehalt handelt, und zwischen $T_G$ und $T_G$ + 35°C, vorzugsweise zwischen $T_G$ und $T_G$ + 20°C und insbesondere zwischen $T_G$ und $T_G$ + 15°C, wenn es sich um einen anderen Stärketyp handelt, unterzogen wird, wobei die Dauer der Wärmebehandlung von 1 Sekunde bis zu 2 Stunden, vorzugsweise 1 Minute bis zu 1 Stunde und insbesondere von 5 Minuten bis zu 30 Minuten, beträgt und wobei diese Behandlung in Abwesenheit von oberhalb 1%, vorzugsweise oberhalb 0,75% und insbesondere oberhalb 0,5%, bezogen auf das Gewicht der der Wärmebehandlung unterzogenen Stärke, liegenden Mengen an alkalischem Mittel durchgeführt wird.

3. Verfahren gemäß einem der Ansprüche 1 und 2, dadurch gekennzeichnet, daß die zur Herstellung des Klebstoffs erforderliche gesamte Stärke der Wärmehandlung in Form von Stärkemilch unterzogen wird, wobei der Klebstoff in einer einzigen flüssigen Phase vorliegt.

4. Verfahren gemäß einem der Ansprüche 1 und 2, dadurch gekennzeichnet, daß lediglich eine Fraktion der Stärke, die in die Zusammensetzung des endgültigen Klebstoffs gelangt, in Form einer Stärkemilch der Wärmebehandlung unterzogen wird, wobei dieser Teil dann im Hinblick auf die nichtbehandelte Fraktion die Rolle des "Trägers" spielt.

5. Verfahren gemäß Anspruch 4, dadurch gekennzeichnet, daß man nacheinander:
– eine Stärkemilch mit einem Trockensubstanzgehalt von 0,5 bis 60, vorzugsweise 5 bis 45 und insbesondere 10 bis 40 Gew.-%, herstellt,
– diese Stärkemilch einer Temperatur oberhalb der Gelatinisierungstemperatur $T_G$ und unterhalb derjenigen, bei der ein endgültiger Bruch der Wasserstoffbindungen, die die Stärkemolekül-Fasern aufrechterhalten, stattfindet, aussetzt,
– die so behandelte Stärkemilch mit einer nicht behandelten Stärkefraktion mischt und
– die üblichen Klebstoffbestandteile für Wellpappe zugibt.

6. Verfahren gemäß einem der Ansprüche 1 bis 5, dadurch gekennzeichnet, daß man zur Herstellung des Klebstoffs zurückgreift:
– auf native Stärken jeglicher Herkunft in natürlicher Form oder Hybridform, die beispielsweise der Kartoffel, dem Maniok, dem Mais, dem Wachsmais, dem Mais mit hohem Amylosegehalt, dem Getreide oder den hieraus herstellbaren Fraktionen, dem Reis, dem Sorghum entstammen,
– sowie auf die chemisch, insbesondere durch Oxidation, Hydrolyse (sauer oder enzymatisch), Veresterung, Veretherung, modifizierten Stärken und andere und/oder deren Gemische.

7. Verfahren gemäß einem der Ansprüche 1 bis 6, dadurch gekennzeichnet, daß die Wärmebehandlung der Stärkemilch eine Behandlung mit Wasserdampf, auf einem Wasserbad oder mit Wellen ist.

8. Verfahren gemäß Anspruch 4, dadurch gekennzeichnet, daß die der Wärmebehandlung in Form einer Milch unterzogene Stärkefraktion in dem endgültigen Klebstoff in einem Anteil, bezogen auf die nicht behandelte oder sekundäre Fraktion, von 119/1 bis 1/119, vorzugsweise 60/1 bis 1/60 und insbesondere 5/1 bis 1/15, vorliegt.

9. Verfahren gemäß einem der Ansprüche 1 bis 7, dadurch gekennzeichnet, daß man zu dem verwendungsbereiten Klebstoff eine Menge an alkalischem Mittel, insbesondere an NaOH, von weniger als 5, vorzugsweise weniger als 4 und insbesondere zwischen 0,5 und 3 Gew.-%, zugibt.

10. Verfahren gemäß einem der Ansprüche 1 bis 9, dadurch gekennzeichnet, daß man bei Wahl einer Temperatur für die Wärmebehandlung der Stärke nahe der $T_G$ einen Kleister mit einer sehr kurzen Textur erhält und bei Wahl eines Wertes nahe $T_G$ + x für diese Tempertur einen Kleister mit einer weniger kurzen Textur erhält.